# EUROPEAN PATENT SPECIFICATION

(11) **EP 3 197 199 B1**
(45) Date of publication and mention of the grant of the patent: **20.03.2019**
(21) Application number: 14884983.9
(22) Date of filing: 31.12.2014
(51) Int. Cl.: H04W 24/04, H04B 17/17, H04B 17/318, H04B 17/345, H04W 52/24

(54) **METHOD AND SYSTEM FOR LOCATING INTERFERENCE TO BASE STATION**
VERFAHREN UND SYSTEM ZUR LOKALISIERUNG VON INTERFERENZEN ZU EINER BASISSTATION
PROCÉDÉ ET SYSTÈME POUR LOCALISER LE BROUILLAGE AU NIVEAU D'UNE STATION DE BASE

(30) Priority: 16.09.2014 CN 201410471322
(43) Date of publication of application: 26.07.2017
(73) Proprietor: ZTE Corporation, Shenzhen City, Guangdong 518057 (CN)
(72) Inventor: CHENG, Junping, Shenzhen Guangdong 518057 (CN); TIAN, Hong, Shenzhen Guangdong 518057 (CN); ZHANG, Tianpeng, Shenzhen Guangdong 518057 (CN)
(74) Representative: Savi, Massimiliano
(86) International application number: PCT/CN2014/096032
(87) International publication number: WO 2015/131654

(56) References cited:
- CN-A- 101 043 234
- CN-A- 101 729 163
- CN-A- 102 821 393
- JP-A- 2006 025 027
- JP-A- 2013 098 911
- US-A- 5 818 389

## Description

### Technical Field

The present invention relates to the field of communication, in particular to a method and a system for locating interference to a base station.

### Background

At present, mainstream 2G (2nd-Generation), 3G (3rd-Generation) and 4g (4th-Generation) base stations all adopt architecture consisting of a BBU (Base Band Unit) + an RRU (Radio Remote Unit) + an electrically adjustable antenna, and adjustment of cell coverage radius is realized by adjusting a downtilt angle of the electrically adjustable antenna. An active antenna is new architecture of a next-generation base station form, the 3GPP (3rd Generation Partnership Project) organization carries out deep researches in LTE (Long Term Evolution) Release 12, and simultaneously R12 will be about to be released. An AAS (Adaptive Antenna System) antenna can change antenna downtilt angle and lobe width by adjusting amplitude and phase of a feed network.

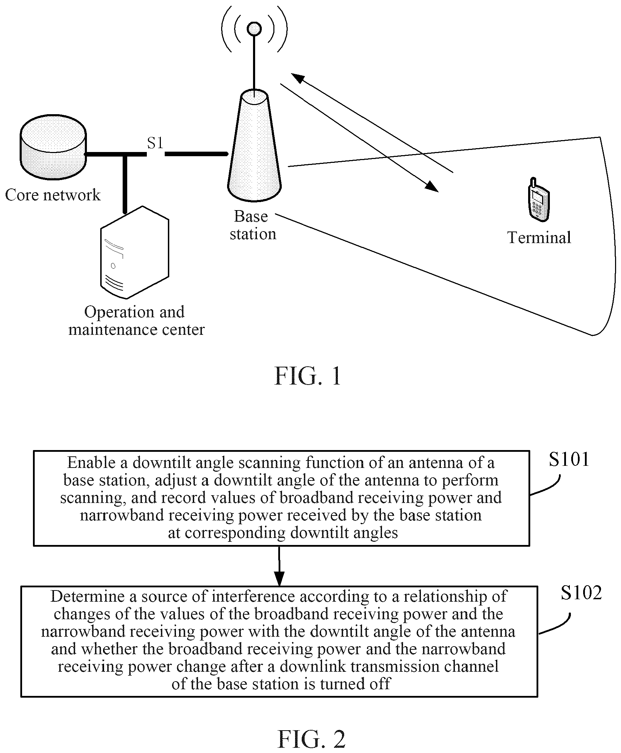

FIG. 1 illustrates a structural schematic diagram of an existing LTE mobile communication system, which mainly includes: a core network, an access network and an operation and maintenance center (i.e., network manager). The network manager consists of the operation and maintenance center, the access network consists of a base station (one node of LTE) and the base station includes a BBU (Base Band Unit), an RRU (Radio Remote Unit) and an antenna (radiation array). The core network and the base station are connected through an S1 interface (interface between the core network and the access network) of the BBU. The BBU and the RRU are connected through optical fibers. For a traditional base station, the base station controls a downtilt angle of antenna through an AISG (Antenna Interface Standards Group) cable; and for an AAS antenna, the base station changes the antenna downtilt angle and wave beam by changing the feed network of the base station.

With the rapid development of mobile communication, a number of 2G, 3G and 4G base
stations of current networks reaches tens of millions, and electromagnetic environments are complex. For various reasons, the current base stations are often influenced by outside interference and cannot work normally. At present, for reasons such as network planning at home, signal coverage in some areas is not good and micro signal enhancers such as "Phone Companion" are secretly erected to enhance coverage. However, this type of devices is not permitted by the telecommunication department and cause serious interference to the base stations of the current networks, resulting that the base stations are collapsed; since 2G, 3G and 4G base stations are co-site and the protection gap is very small, adjacent-channel interference is caused; as weathered by wind and rain, the connection of an antenna feed system becomes deteriorated and serious self-interference is also caused; and with the development of information security, pseudo base stations emerge in a great number and not only intercept information of people but also cause very great interference to the current networks, resulting that the performance of the current networks decreases seriously. Since the type of interference and the production causes of sources of interference cannot be determined, the interference to the interfered base stations cannot be eliminated or decreased, resulting that the base stations cannot work normally.

The document US 5818389 A discloses a communication interference detection method which determines the direction toward a source of interference by combining interference signals from a sweeping directional antenna with communication signals from an omni antenna while measuring and recording power, frequency spectra, and interference-to-signal ratio over a wide range of conditions using a spectrum analyzer and power meter and communication receivers.

### Summary

A method and a system for locating interference to a base station, which can determine the type of interference to the base station and the production causes of sources of interference, according to independent claims are provided. Further improvements and embodiments are provided in the dependent claims.

Also provided is a method for locating interference to a base station, including: enabling a downtilt angle scanning function of an antenna of a base station, adjusting a downtilt angle of the antenna to perform scanning, and recording values of broadband receiving power and narrowband receiving power received by the base station at corresponding downtilt angles; and determining a source of interference according to a relationship of changes of the values of the broadband receiving power and the narrowband
receiving power with the downtilt angle of the antenna and whether the values of the broadband receiving power and the narrowband receiving power change after a downlink transmission channel of the base station is turned off. The step of determining the source of interference according to the relationship of changes of the values of the broadband receiving power and the narrowband receiving power with the downtilt angle of the antenna and whether the values of the broadband receiving power and the narrowband receiving power change after the downlink transmission channel of the base station is turned off includes:
judging whether the values of the broadband receiving power and the narrowband receiving power change with change of the downtilt angle of the antenna; if the values of the broadband receiving power and the narrowband receiving power do not change with the downtilt angle of the antenna, the values of both the broadband receiving power and the narrowband receiving power decrease after the downlink transmission channel of the base station is turned off and interference signals disappear, determining that the source of interference is inside the base station; and if the values of the broadband receiving power and the narrowband receiving power change with the downtilt angle of the antenna and the values of both the broadband receiving power and the narrowband receiving power do not change after the downlink transmission channel of the base station is turned off, determining that the source of interference is outside the base station.

Alternatively, before the step of enabling the downtilt angle scanning function of the antenna of the base station, the method further includes:
judging whether a call drop rate of Radio Resource Control, RRC, subscribers exceeds a preset call drop threshold; and if the call drop rate of the RRC subscribers exceeds the preset call drop threshold, detecting the values of the broadband receiving power and the narrowband receiving power received by the base station, and enabling the downtilt angle scanning function of the antenna of the base station if any one of preset conditions is satisfied, herein the preset conditions include that: the value of the narrowband receiving power exceeds a preset narrowband receiving power threshold; and the value of the broadband receiving power exceeds a preset broadband receiving power threshold.

Alternatively, after the step of determining that the source of interference is inside the base station, the method further includes:
calculating an intermodulation frequency of an intermodulation product in an entire bandwidth or a useful signal band;
setting a downlink frequency of the base station to be upper and lower boundary frequencies of a downlink band in the useful signal band, setting transmitting power of the base station to be half of rated power of the base station, and setting an uplink frequency of the base station to be the intermodulation frequency; and
when it is judged that the value of the broadband receiving power exceeds the preset broadband receiving power threshold and/or the value of the narrowband receiving power exceeds the preset narrowband receiving power threshold, determining that the source of interference is an antenna feed system of the base station.

Alternatively, the step of calculating the intermodulation frequency of the intermodulation product in the entire bandwidth and the useful signal band includes:
calculating the intermodulation frequency f=m*F1±n*F2, judging whether f falls into an uplink band within the useful signal band or within a band of the entire bandwidth, and if f falls into the uplink band within the useful signal band or within the band of the entire bandwidth, recording a frequency which falls into the corresponding band as the intermodulation frequency,
where F1 and F2 are respectively the upper and lower boundary frequencies of the downlink band within the useful signal band, values of m and n are integers of 0-7 and m and n are not 0 at the same time.

Alternatively, after the step of determining that the source of interference is outside the base station, the method further includes:
when it is judged that the values of the broadband receiving power and the narrowband receiving power change with the downtilt angle of the antenna and the values of both the broadband receiving power and the narrowband receiving power do not change after the downlink transmission channel of the base station is turned off, judging whether the interference signals disappear when the downlink transmission channel of the base station is turned off; and if the interference signals disappear, determining that the source of interference outside the base station is a micro signal enhancer; and
using a downtilt angle corresponding to a maximum value of broadband receiving power and a maximum value of narrowband receiving power, which are recorded, as an azimuth angle of the source of interference outside the base station.

Alternatively, after the step of determining that the source of interference is outside the base station, the method further includes:
acquiring a value of transmitting power of the source of interference outside the base station and a value of broadband receiving power received by the base station;
calculating spatial attenuation RL of interference outside the base station, which equals to the transmitting power of the source of interference outside the base station minus the broadband receiving power received by the base station; and
obtaining a distance between the source of interference outside the base station and the base station according to a channel transmission model formula.

Alternatively, after the step of determining that the source of interference is outside the base station, the method further includes:
disabling the downtilt angle scanning function of the antenna;
setting a configuration frequency of a Phase-Locked Loop, PLL, to be within the uplink band in the useful signal band, scanning in the entire bandwidth of the base station, and recording the values of the broadband receiving power and the narrowband receiving power received by the base station, then using a frequency corresponding to a maximum value of broadband receiving power and a maximum value of narrowband receiving power as a frequency of interference outside the base station;
setting an uplink frequency of the base station to be the frequency of interference outside the base station, simultaneously enabling the downtilt angle scanning function of the antenna again, adjusting the downtilt angle of the antenna, to performing scanning, and recording values of the broadband receiving power and the narrowband receiving power received by the base station at the corresponding downtilt angles, and then using a downtilt angle corresponding to a maximum value of broadband receiving power and a maximum value of narrowband receiving power, which are recorded, as an azimuth angle of the source of interference outside the base station.

Alternatively, the antenna is a smart antenna, and after the step of using the downtilt angle corresponding to the maximum value of broadband receiving power and the maximum value of narrowband receiving power as the azimuth angle of the source of interference outside the base station, the method further includes:
enabling a scanning function of a horizontal plane coverage sector area of the smart antenna, performing scanning from -Y degree to +Y degree, recording values of broadband receiving power and narrowband receiving power at each degree of a horizontal plane of the smart antenna, and determining a location of the source of interference outside the base station according to an angle corresponding to a maximum value of maximum broadband receiving power and a maximum value of maximum narrowband receiving power at each degree of the horizontal plane of the smart antenna, herein Y is an azimuth angle of the source of interference outside the base station.

Also provided is a system for locating interference to a base station including: an antenna control module arranged to enable a downtilt angle scanning function of an antenna of a base station, adjust a downtilt angle of the antenna to perform scanning and record values of broadband receiving power and narrowband receiving power received by the base station at corresponding downtilt angles; and an interference judgment module arranged to determine a source of interference according to a relationship of changes of the values of the broadband receiving power and the narrowband receiving power with the downtilt angle of the antenna and whether the values of the broadband receiving power and the narrowband receiving power change after a downlink transmission channel of the base station is turned off. The interference judgment module is arranged to determine the source of interference according to the relationship of changes of the values of the broadband receiving power and the narrowband receiving power with the downtilt angle of the antenna and whether the values of the broadband receiving power and the narrowband receiving power change after the downlink transmission channel of the base station is turned off according to the following mode:
judging whether the values of the broadband receiving power and the narrowband receiving power change with the downtilt angle of the antenna; if the values of the broadband receiving power and the narrowband receiving power do not change with the downtilt angle of the antenna, the values of both the broadband receiving power and the narrowband receiving power decrease after the downlink transmission channel of the base station is turned off and interference signals disappear, determining that the source of interference is inside the base station; and if the values of the broadband receiving power and the narrowband receiving power change with the downtilt angle of the antenna and the values of both the broadband receiving power and the narrowband receiving power do not change after the downlink transmission channel of the base station is turned off, determining that the source of interference is outside the base station.

Alternatively, the system further includes: a receiving power detection module arranged to, before the downtilt angle scanning function of the antenna of the base station is enabled, judge whether a call drop rate of Radio Resource Control RRC subscribers exceeds a preset call drop threshold; and if the call drop rate of the RRC subscribers exceeds the preset call drop threshold, detect the broadband receiving power and the narrowband receiving power received by the base station; and
the antenna control module is further arranged to enable the downtilt angle scanning function of the antenna of the base station if any one of the following preset conditions is satisfied: the value of the narrowband receiving power exceeds a preset narrowband receiving power threshold, and the value of the broadband receiving power exceeds a preset broadband receiving power threshold.

Alternatively, the interference judgment module is further arranged to, after it is determined that the source of interference is inside the base station, calculate an intermodulation frequency of an intermodulation product in an entire bandwidth and a useful signal band;
set a downlink frequency of the base station to be two, upper and lower, boundary frequencies of a downlink band in the useful signal band, set transmitting power of the base station to be half of rated power of the base station, and set an uplink frequency of the base station to be the intermodulation frequency; and
judge again whether the broadband receiving power received by the base station exceeds the preset broadband receiving power threshold and/or the narrowband receiving power exceeds the preset narrowband receiving power threshold, and if the broadband receiving power received by the base station exceeds the preset broadband receiving power threshold and/or the narrowband receiving power exceeds the preset narrowband receiving power threshold, then determine that the source of interference is an antenna feed system of the base station.

Alternatively, the interference judgment module is further arranged to calculate the intermodulation frequency of the intermodulation product in the entire bandwidth and the useful signal band according to the following mode:
calculating the frequency f=m*F1±n*F2, judging whether f falls into an uplink band within the useful signal band or within a band of the entire bandwidth, and if f falls into the uplink band within the useful signal band or within the band of the entire bandwidth, recording a frequency which falls into the corresponding band as the intermodulation frequency,
where F1 and F2 are respectively the upper and lower boundary frequencies of the downlink band within the useful signal band, values of m and n are integers of 0-7 and m and n are not 0 at the same time.

Alternatively, the system further includes an interference azimuth determination module connected with the interference judgment module.

The interference judgment module is further arranged to, after it is determined that the source of interference is outside the base station, when it is judged that the values of the broadband receiving power and the narrowband receiving power change with the downtilt angle of the antenna and values of both the broadband receiving power and the narrowband receiving power both do not change after the downlink transmission channel of the base station is turned off, judge whether interference signals disappear when the downlink transmission channel of the base station is turned off, and if the interference signals disappear, determine that the source of interference is a micro signal enhancer; and the interference azimuth determination module is arranged to use a downtilt angle corresponding to a maximum value of broadband receiving power and a maximum value of narrowband receiving power, which are recorded, as an azimuth angle of the source of interference outside the base station.

Alternatively, the system further includes an interference azimuth determination module connected with the interference judgment module and arranged to acquire transmitting power of the source of interference outside the base station and broadband receiving power received by the base station; calculate spatial attenuation RL of outside fixed interference outside the base station, which equals to the transmitting power of the source of interference outside the base station minus the broadband receiving power received by the base station; and obtain a distance between the source of interference outside the base station and the base station according to a channel transmission model formula.

Alternatively, the system further includes an interference azimuth determination module connected with the interference judgment module.

The interference judgment module is further arranged to, after it is determined that the source of interference is outside the base station, send an instruction of disabling the downtilt angle scanning function of the antenna to the antenna control module; the interference azimuth determination module is arranged to set a configuration frequency of a Phase-Locked Loop PLL, to be within the uplink band of the useful signal band, perform scanning in the entire bandwidth of the base station, and record the values of the broadband receiving power and the narrowband receiving power received by the base station, and then use a frequency corresponding to a maximum value of maximum broadband receiving power and a maximum value of maximum narrowband receiving power as a frequency of the outside fixed interference; and set an uplink frequency of the base station to be the frequency of the outside fixed interference, simultaneously trigger the antenna control module to enable the downtilt angle scanning function of the antenna again, and use a downtilt angle corresponding to a maximum value of broadband receiving power and a maximum value of narrowband receiving power, which are recorded, as an azimuth angle of the source of interference outside the base station; and the antenna control module is further arranged to, after receiving the instruction of the interference judgment module, disable the downtilt angle scanning function of the antenna; and enable the downtilt angle scanning function of the antenna of the base station again under the trigger of the interference azimuth determination module, adjust the downtilt angle of the antenna to perform scanning, and record values of broadband receiving power and narrowband receiving power received by the base station at corresponding downtilt angles.

Alternatively, the antenna is a smart antenna, and the interference azimuth determination module is further arranged to, after the angle corresponding to the value of maximum broadband receiving power and the value of maximum narrowband receiving power is determined as the azimuth angle of the source of the outside fixed interference, enable a scanning of a horizontal plane coverage sector area of the smart antenna, perform scanning from -Y degree to +Y degree, record values of broadband receiving power and narrowband receiving power at each degree of a horizontal plane of the smart antenna, and determine a location of the source of interference outside the base station according to an angle corresponding to a value of maximum broadband receiving power and a value of maximum narrowband receiving power at each degree of the horizontal plane of the smart antenna, herein Y is an azimuth angle of the source of interference outside the base station.

The embodiment of the present invention further provides a computer program implementing the method.

The embodiment of the present invention further provides a computer-readable storage medium storing the computer program.

According to the method and the system for locating interference to the base station provided by the embodiments of the present invention, aiming at the problem that the base station cannot work normally since the current communication base station is interfered, by judging the type of interference and the production causes of sources of interference and rapidly locating the sources of interference, the interference can be decreased or eliminated, the performance of the current networks is improved, and the benefits of operators are maintained.

### Brief Description of Drawings

FIG. 1 illustrates a structural schematic diagram of an LTE mobile communication system.
FIG. 2 illustrates a flowchart of a method for locating interference to a base station in the embodiment.
FIG. 3 illustrates a flowchart of locating a micro signal enhancer in the embodiment.
FIG. 4 illustrates a flowchart of locating outside fixed interference in the embodiment.
FIG. 5 illustrates a flowchart of locating interference inside a base station in the embodiment.
FIG. 6 illustrates a structural diagram of a system for locating interference to a base station in the embodiment.

### Detailed Description

The embodiments of the present invention will be described below in detail with reference to the drawings. It needs to be stated that the embodiments in the present application and the features in the embodiments may be mutually and freely combined under the situation of no conflict.

### Embodiment:

As illustrated in FIG. 2, this embodiment provides a method for locating interference to a base station, including the following steps:
In a step S101, a downtilt angle scanning function of an antenna of a base station is enabled, a downtilt angle of the antenna is adjusted to perform scanning, and values of broadband receiving power and narrowband receiving power received by the base station at corresponding downtilt angles are recorded.

The downtilt angle of the antenna is adjusted and scanning is performed, e.g., scanning from 0 degree to X degree, herein X degree is a maximum adjustable angle of the antenna. In this embodiment, the broadband receiving power refers to receiving power in the entire medium band (filter medium band), and the narrowband receiving power refers to receiving power in a band configured by a network manager at background.

In the step S101, before the downtilt angle scanning function of the antenna of the base station is enabled, the method further includes the following operations.

Whether a call drop rate of Radio Resource Control RRC subscribers exceeds a preset call drop threshold is judged; and if the call drop rate of the RRC subscribers exceeds the preset call drop threshold, the broadband receiving power and the narrowband receiving power received by the base station are detected, and the downtilt angle scanning function of the antenna of the base station is enabled if any one of the following preset conditions is satisfied.

The value of the narrowband receiving power exceeds a preset narrowband receiving power threshold; and the value of the broadband receiving power exceeds a preset broadband receiving power threshold.

The call drop threshold of the RRC subscribers is set according to a value specified by an operator, e.g., 5%, and the narrowband receiving power threshold and the broadband receiving power threshold, for example, may be values of narrowband receiving power and broadband receiving power received by the base station when the call drop rate of the RRC subscribers is 5%.

Herein, the antenna of the base station may be an electrically adjustable antenna, an AAS antenna or a smart antenna.

In a step S102, a source of interference is determined according to a relationship of changes of the values of the broadband receiving power and the narrowband receiving power with the downtilt angle of the antenna and whether the broadband receiving power and the narrowband receiving power change after a downlink transmission channel of the base station is turned off.

Herein, the step S102 includes the following steps.

In a step S102a, whether the values of the broadband receiving power and the narrowband receiving power change with the change of the downtilt angle of the antenna is judged; if the values of the broadband receiving power and the narrowband receiving power do not change with the downtilt angle of the antenna, step S102b is executed; and if the values of the broadband receiving power and the narrowband receiving power change with the downtilt angle of the antenna, step S102c is executed.

In a step 102b, the values of the broadband receiving power and the narrowband receiving power do not change with the downtilt angle of the antenna, both the broadband receiving power and the narrowband receiving power decrease after the downlink transmission channel of the base station is turned off and interference signals disappear, it is determined that the interference comes from the inside of the base station.

Herein, after it is determined that the interference comes from the inside of the base station, the method further includes the following steps of determining the source of interference inside the base station. An intermodulation frequency of an intermodulation product in an entire bandwidth and a useful signal band is calculated. A downlink frequency of the base station is set to be upper and lower boundary frequencies F1 and F2 of a downlink band in the useful signal band, transmitting power of the base station is set to be half of rated power of the base station and an uplink frequency of the base station is set to be the intermodulation frequency; and

It is judged again whether the value of the broadband receiving power received by the base station exceeds the preset broadband receiving power threshold and/or the value of the narrowband receiving power received by the base station exceeds the preset narrowband receiving power threshold; if yes, it is determined that the interference is caused by poor connection of an antenna feed system of the base station and the antenna feed needs to be connected again.

Intermodulation interference is a product of signals which pass through a nonlinear device. A poorly connected antenna feed system is equivalent to the nonlinear device. When a plurality of signals at different frequencies simultaneously pass through the poorly connected antenna feed system (nonlinear device) for transmission, numerous new frequency components (some linear combinations of input frequencies) will be produced after nonlinear transformation, and these frequency components are called as intermodulation products.

Herein, the step that the intermodulation frequency of the intermodulation product in the entire bandwidth and the useful signal band is calculated includes the following operations.

The frequency f=m*F1±n*F2 is calculated, whether f falls into an uplink band in the useful signal band or a band of the entire bandwidth is judged, and if f falls into the uplink band in the useful signal band or the band of the entire bandwidth, the frequency which falls into the corresponding band is recorded as the intermodulation frequency.

In this embodiment, the frequency which falls into the corresponding band includes one or more, herein the downlink band in the useful signal band is F1-F2, the uplink band is F3-F4, the band of the entire bandwidth is F5-F6, F1, F2, F3, F4, F5 and F6 are upper and lower boundary frequencies of corresponding bands, values of m and n are integers of 0-7 and m and n are not simultaneously 0.

LTE-UMTS is a broadband system, the downlink frequency refers to transmitting frequency and the frequency range is F1-F2; similarly, the uplink frequency refers to receiving frequency and usually refers to narrowband receiving frequency, and the frequency range is F3-F4; and in addition, the frequency range of the broadband receiving frequency is the band F5-F6 of the entire bandwidth.

In a step S102c, if the values of the broadband receiving power and the narrowband receiving power change with the downtilt angle of the antenna and the broadband receiving power and the narrowband receiving power both do not change after the downlink transmission channel of the base station is turned off, it is determined that the interference comes from the outside of the base station.

In addition, after it is determined that the interference comes from the outside, the method further includes the following steps of determining the source of interference.

When it is judged that the values of the broadband receiving power and the narrowband receiving power change with the downtilt angle of the antenna and the broadband receiving power and the narrowband receiving power both do not change after the downlink transmission channel of the base station is turned off, whether interference signals disappear when the downlink transmission channel of the base station is turned off is judged, and if the interference signals disappear, it is determined that the source of interference is a micro signal enhancer.

After it is determined that the source of interference is the micro signal enhancer, a downtilt angle corresponding to a value of maximum broadband receiving power and a value of maximum narrowband receiving power, which are recorded in step S101, may be used as an azimuth angle of the micro signal enhancer. It needs to be stated that, when it is determined that the source of interference is the micro signal enhancer, since the receiving frequency of the base station is consistent with the interference frequency of the micro signal enhancer and the value of the maximum broadband receiving power is equal to the value of the maximum narrowband receiving power, a situation that the downtilt angles corresponding to the both are not consistent will not occur.

In addition, as an alternative mode, after it is determined that the source of interference is the micro signal enhancer, the method further includes the following steps of determining a location of the source of interference.

Transmitting power of the source of interference and broadband receiving power received by the base station are acquired.

Spatial attenuation RL of outside fixed interference is calculated, which equals to the transmitting power of the outside fixed interference minus the broadband receiving power received by the base station.

A distance between the source of interference and the base station is obtained according to a channel transmission model formula (i.e., a nonlinear relation between spatial attenuation and distance).

Herein, for the channel transmission model formula, calculation formulas under different transmission models are slightly different. A reference may be made to wireless communication principle books. In this embodiment, exemplary description is made as follow:
RL=C+X*1g(F) MHz+X*1g(R) km, where C is a constant 32.4 under a free space transmission model, X is also a coefficient under the free space transmission model, F is a current uplink frequency, F=(F1+F2)/2, and R is a distance between the source of the outside interference and the base station. By taking that the transmitting power of the micro signal enhancer is tracked to be 10mW as an example, the value of RL may be calculated according to that RL equals to the transmitting power of the micro signal enhancer minus the receiving power of RRU, and then the distance between the source of interference and the base station may be reckoned according to the distance formula of RL.

In addition, as an alternative mode, after it is determined that the source of interference is outside the base station (instead of the micro signal enhancer), the method further includes the following step.

The downtilt angle scanning function of the antenna is disabled, and the method further includes the following steps of determining an azimuth of the source of the outside interference.

A configuration frequency of a Phase-Locked Loop (PLL) is set to be within the uplink band (F3-F4) in the useful signal bands, scanning is performed in the entire bandwidth (F5-F6) of the base station. The values of broadband receiving power and narrowband receiving power received by the base station are recorded. A frequency corresponding to a value of maximum broadband receiving power and a value of maximum narrowband receiving power is used as a frequency of the outside fixed interference. An uplink frequency of the base station is set to be the frequency of the outside fixed interference, simultaneously the downtilt angle scanning function of the antenna is enabled again, the downtilt angle of the antenna is adjusted, to perform scanning is performed. The values of broadband receiving power and narrowband receiving power received by the base station at corresponding downtilt angles are recorded. Adowntilt angle corresponding to a value of maximum broadband receiving power and a value of maximum narrowband receiving power, which are recorded, is used as an azimuth angle of the outside fixed interference.

Herein, the downtilt angle of the antenna is adjusted and scanning is performed, e.g., scanning from 0 degree to X degree, herein X degree is a maximum adjustable angle of the antenna. In addition, when the receiving frequency of the base station is set to be the frequency of the outside interference, since the value of the maximum broadband receiving power is equal to the value of the maximum narrowband receiving power, a situation that the downtilt angles corresponding to the both are not consistent will not occur.

In addition, as an alternative mode, if the base station supports a smart antenna, an accurate location of the source of the outside fixed interference (e.g., micro signal enhancer) may be accurately obtained through scanning in a horizontal plane and a vertical plane of the smart antenna. After the angle corresponding to the value of maximum broadband receiving power and the value of maximum narrowband receiving power is determined as the azimuth angle of the source of the outside fixed interference (which also includes the micro signal enhancer), the method further includes the following steps:
A scanning of a horizontal plane coverage sector area of the smart antenna is enabled,. The scanning from -Y degree to +Y degree is performed,. The values of broadband receiving power and narrowband receiving power at each degree of a horizontal plane of the smart antenna are recorded,. and a A location of the source of the outside fixed interference is determined according to an angle corresponding to a value of maximum broadband receiving power and a value of maximum narrowband receiving power at each degree of the horizontal plane of the smart antenna, herein Y is an azimuth angle of the source of the outside fixed interference.

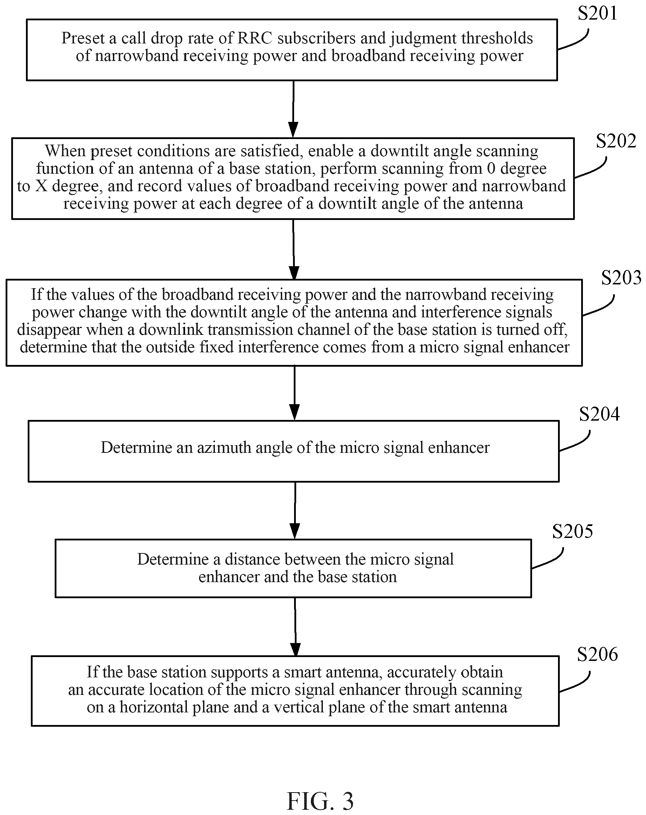

In one application example, as illustrated in FIG. 3, this embodiment provides a method for locating a position of interference of a micro signal enhancer, including the following steps:
In a step S201, a base station statistically collects received narrowband receiving power (receiving power configured by a network manager in a band) and broadband receiving power (power in an entire medium band) and a call drop rate of current RRC subscribers; and when the call drop rate of the RRC subscriber reaches five percent (or a value specified by an operator), a value of narrowband receiving power and a value of broadband receiving power are recorded, and the two values are used as judgment thresholds of narrowband receiving power and broadband receiving power.

In a step S202, when the call drop rate exceeds five percent and the value of the narrowband receiving power or the value of the broadband receiving power exceeds the judgment threshold preset in step S201, a downtilt angle scanning function of an electrically adjustable antenna/AAS antenna/smart antenna is enabled, scanning from 0 degree to X degree is performed, and values of broadband receiving power and narrowband receiving power at each degree of the downtilt angle of the antenna are recorded.

In a step S203, if the values of the broadband receiving power and the narrowband receiving power change with the downtilt angle of the antenna and it is found that the broadband receiving power and the narrowband receiving power both do not change after a downlink transmission channel of the base station is turned off, it may be judged that interference is outside fixed interference; and if the received values of power change with the downtilt angle of the antenna and interference signals disappear when the downlink transmission channel of RRU is turned off, the interference signals may come from interference of a micro signal enhancer.

In a step S204, an azimuth angle of the micro signal enhancer is determined.

A downtilt angle corresponding to a value of maximum broadband receiving power and a value of maximum narrowband receiving power, which are recorded in step S202, is used as an azimuth angle of the micro signal enhancer.

In a step S205, a distance between the micro signal enhancer and the base station is determined.

For example, if transmitting power of the micro signal enhancer is tracked to be 10mW, receiving power of RRU is acquired, spatial attenuation RL is calculated and a value of R is reckoned according to RL=C+X*lg(F) MHz+X*lg(R) km, where RL equals to the transmitting power of the micro signal enhancer minus the receiving power of the RRU, and R is the distance between the source of the outside fixed interference and the base station.

In a step S206, if the base station supports a smart antenna, an accurate location of the micro signal enhancer may be accurately obtained through scanning on a horizontal plane and a vertical plane of the smart antenna.

After the angle corresponding to the value of the maximum broadband receiving power and the value of the maximum narrowband receiving power is determined as the azimuth angle of the outside fixed interference, the method further includes the following steps.

Scanning of a horizontal plane coverage sector area of the smart antenna is enabled, scanning from -Y degree to +Y degree is performed, values of broadband receiving power and narrowband receiving power at each degree of the horizontal plane of the smart antenna are recorded, and a location of the source of the outside fixed interference is determined according to an angle corresponding to a value of maximum broadband receiving power and a value of maximum narrowband receiving power at each degree of the horizontal plane of the smart antenna, herein Y is an azimuth angle of the source of the outside fixed interference.

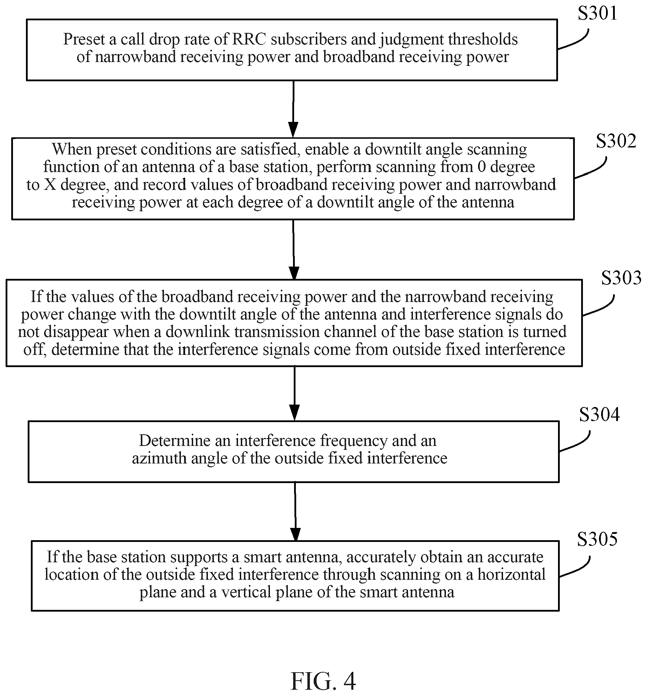

In one application example, as illustrated in FIG. 4, this embodiment provides a method for locating a location of outside fixed interference, including the following steps:
Step S301 to step S302 are the same as step S201 to step S202.

In a step S303, if the values of the broadband receiving power and the narrowband receiving power change with the downtilt angle of the antenna and it is found that the broadband receiving power and the narrowband receiving power both do not change after a downlink transmission channel of the base station is turned off, it may be judged that interference is outside fixed interference; and if the received values of power change with the downtilt angle of the antenna and interference signals do not disappear when the downlink transmission channel of RRU is turned off, the interference signals may come from a source of outside fixed interference, and the downtilt angle scanning function of the antenna is disabled.

In a step S304, an interference frequency and an azimuth angle of the outside fixed interference are determined.

Herein, the step specifically includes the following operations: the configuration frequency of a PLL is modified to be within a range of F3-F4, scanning is performed in the entire bandwidth of the base station, received power pairs (broadband receiving power and narrowband receiving power) are recorded, and a frequency corresponding to a maximum receiving power pair (value of maximum broadband receiving power and value of maximum narrowband receiving power) is the frequency of the outside fixed interference; and an uplink frequency of the base station is set to be the frequency of the outside fixed interference, simultaneously the downtilt angle scanning function of the electrically adjustable antenna/AAS antenna/smart antenna is enabled again, scanning from 0 degree to X degree is performed, values of broadband receiving power and narrowband receiving power at each degree of the downtilt angle of the antenna are recorded, and a downtilt angle corresponding to a value of maximum broadband receiving power and a value of maximum narrowband receiving power is determined as an azimuth angle of the source of the outside fixed interference. Thereby, the interference frequency and the azimuth angle corresponding to the interference frequency are obtained.

Herein, X degree is a maximum adjustable angle of the antenna.

In a step S305, if the base station supports a smart antenna, an accurate location of the source of the outside fixed interference may be accurately obtained through scanning on a horizontal plane and a vertical plane of the smart antenna.

After the downtilt angle corresponding to the value of the maximum broadband receiving power and the value of the maximum narrowband receiving power is determined as the azimuth angle of the source of the outside fixed interference, the method further includes the following steps:
Scanning of a horizontal plane coverage sector area of the smart antenna is enabled, scanning from -Y degree to +Y degree is performed, values of broadband receiving power and narrowband receiving power at each degree of the horizontal plane of the smart antenna are recorded, and a location of the source of the outside fixed interference is determined according to an angle corresponding to a value of maximum broadband receiving power and a value of maximum narrowband receiving power at each degree of the horizontal plane of the smart antenna, herein Y is an azimuth angle of the source of the outside fixed interference.

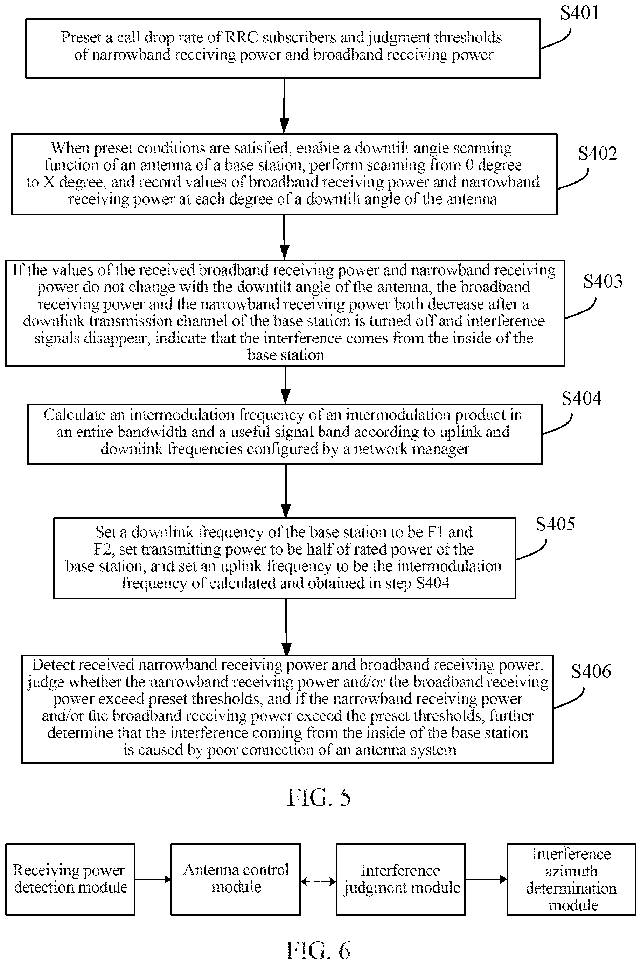

In another application example, as illustrated in FIG. 5, this embodiment provides a process of locating interference inside a base station and judging a magnitude of passive intermodulation of an antenna feed system outside the base station. The process includes the following steps:
Step S401 to step S402 are the same as step S301 to step S302.

In a step S403, if the values of the received broadband receiving power and narrowband receiving power do not change with the downtilt angle of the antenna, the broadband receiving power and the narrowband receiving power both decrease after a downlink transmission channel of the base station is turned off and interference signals disappear, it is indicated that the interference comes from the inside of the base station and may be caused by excessively high passive intermodulation caused by poor connection of an antenna feed system of the base station.

In a step S404, an intermodulation frequency of an intermodulation product in an entire bandwidth and a useful signal band is calculated according to uplink and downlink frequencies configured by a network manager.

The downlink frequency refers to transmitting frequency and the frequency range is F1-F2; similarly, the uplink frequency refers to receiving frequency and usually refers to narrowband receiving frequency, and the frequency range is F3-F4; and in addition, the frequency range of the broadband receiving frequency is the band F5-F6 of the entire bandwidth, and F1, F2, F3, F4, F5 and F6 are upper and lower boundary frequencies of corresponding bands.

Herein, the frequency f=m*F1±n*F2 is calculated, whether f falls into an uplink band in the useful signal band or a band of the entire bandwidth is judged, and if f falls into the uplink band in the useful signal band or the band of the entire bandwidth, the frequency which falls into the corresponding band is recorded as the intermodulation frequency.

Herein, the downlink band of the useful signal band configured by the network manager is F1-F2, the uplink band is F3-F4, the band of the entire bandwidth is F5-F6, F1, F2, F3, F4, F5 and F6 are upper and lower boundary frequencies of corresponding bands, values of m and n are integers of 0-7 and m and n are not simultaneously 0.

In a step S405, a downlink frequency (transmitting frequency) of the base station is set to be two upper and lower boundary frequencies of the downlink band of the useful signal band, i.e., F1 and F2, transmitting power is set to be half of rated power of the base station, and an uplink frequency (receiving frequency) is set to be the intermodulation frequency f calculated and obtained in step S404.

In a step S406, narrowband receiving power and broadband receiving power received by the base station are detected, whether the broadband receiving power received by the base station exceeds a preset broadband receiving power threshold and/or the narrowband receiving power exceeds a preset narrowband receiving power threshold are judged, if the broadband receiving power exceeds the preset broadband receiving power threshold and/or the narrowband receiving power exceeds the preset narrowband receiving power threshold, it may be determined that the interference coming from the inside of the base station is caused by poor connection of the antenna system and the antenna feed needs to be connected again.

As illustrated in FIG. 6, this embodiment provides a system for locating interference to a base station, including: an antenna control module and an interference judgment module.

The antenna control module is arranged to enable a downtilt angle scanning function of an antenna of a base station, adjust a downtilt angle of the antenna, perform scanning and record values of broadband receiving power and narrowband receiving power received by the base station at corresponding downtilt angles; and

The interference judgment module is arranged to determine a source of interference according to a relationship of changes of the values of the broadband receiving power and the narrowband receiving power with the downtilt angle of the antenna and whether the broadband receiving power and the narrowband receiving power change after a downlink transmission channel of the base station is turned off.

Herein, the interference judgment module is arranged to determine the source of interference according to the relationship of changes of the values of the broadband receiving power and the narrowband receiving power with the downtilt angle of the antenna and whether the broadband receiving power and the narrowband receiving power change after the downlink transmission channel of the base station is turned off according to the following mode:
judging whether the values of the broadband receiving power and the narrowband receiving power change with the downtilt angle of the antenna; if the values of the broadband receiving power and the narrowband receiving power do not change with the downtilt angle of the antenna, the broadband receiving power and the narrowband receiving power both decrease after the downlink transmission channel of the base station is turned off and interference signals disappear, determining that the source of interference is inside the base station; and if the values of the broadband receiving power and the narrowband receiving power change with the downtilt angle of the antenna and the broadband receiving power and the narrowband receiving power both do not change after the downlink transmission channel of the base station is turned off, determining that the source of interference is outside the base station.

Herein, the system further includes: a receiving power detection module.

The receiving power detection module is arranged to, before the downtilt angle scanning function of the antenna of the base station is enabled, judge whether a call drop rate of Radio Resource Control RRC subscribers exceeds a preset call drop threshold; and if the call drop rate of the RRC subscribers exceeds the preset call drop threshold, detect the broadband receiving power and the narrowband receiving power received by the base station.

The antenna control module is further arranged to enable the downtilt angle scanning function of the antenna of the base station if any one of the following preset conditions is satisfied.

The value of the narrowband receiving power exceeds a preset narrowband receiving power threshold.

The value of the broadband receiving power exceeds a preset broadband receiving power threshold.

Herein, the interference judgment module is further arranged to, after it is determined that the interference comes from the inside of the base station, determine the source of interference inside the base station according to the following mode:
calculating an intermodulation frequency of an intermodulation product in an entire bandwidth and a useful signal band;
setting a downlink frequency of the base station to be two upper and lower boundary frequencies of a downlink band in the useful signal band, setting transmitting power of the base station to be half of rated power of the base station and setting an uplink frequency of the base station to be the intermodulation frequency; and
judging again whether the broadband receiving power received by the base station exceeds the preset broadband receiving power threshold and/or the narrowband receiving power exceeds the preset narrowband receiving power threshold, and if the broadband receiving power received by the base station exceeds the preset broadband receiving power threshold and/or the narrowband receiving power exceeds the preset narrowband receiving power threshold, determining that the interference is caused by poor connection of an antenna feed system of the base station.

Herein, the interference judgment module is further arranged to calculate the intermodulation frequency of the intermodulation product in the entire bandwidth and the useful signal band according to the following mode:
calculating the frequency f=m*F1±n*F2, judging whether f falls into an uplink band in the useful signal band or a band of the entire bandwidth, and if f falls into the uplink band in the useful signal band or the band of the entire bandwidth, recording the frequency which falls into the corresponding band as the intermodulation frequency,
where F1 and F2 are respectively the upper and lower boundary frequencies of the downlink band in the useful signal band, values of m and n are integers of 0-7 and m and n are not simultaneously 0.

In addition, the interference judgment module is further arranged to, after it is determined that the interference is outside fixed interference, determine the source of fixed interference outside the base station according to the following mode:
when it is judged that the values of the broadband receiving power and the narrowband receiving power change with the downtilt angle of the antenna and the broadband receiving power and the narrowband receiving power both do not change after the downlink transmission channel of the base station is turned off, further judging whether interference signals disappear when the downlink transmission channel of the base station is turned off, and if the interference signals disappear, determining that the outside fixed interference is interference coming from a micro signal enhancer.

As an alternative mode, the system provided by this embodiment further includes an interference azimuth determination module connected with the interference judgment module and arranged to determine an azimuth angle of the micro signal enhancer..

The interference azimuth determination module is arranged to use a downtilt angle corresponding to a value of maximum broadband receiving power and a value of maximum narrowband receiving power, which are recorded, as an azimuth angle of the micro signal enhancer.

In addition, as an alternative mode, by taking that the outside interference comes from the micro signal enhancer as an example, the interference azimuth determination module is further arranged to determine a location of the outside fixed interference according to the following mode:
acquiring transmitting power of the source of the outside fixed interference and broadband receiving power received by the base station;
calculating spatial attenuation RL of the source of the outside fixed interference, which equals to the transmitting power of the outside fixed interference minus the broadband receiving power received by the base station; and
obtaining a distance between the source of the outside fixed interference and the base station according to a channel transmission model formula.

As another alternative mode, the interference judgment module is further arranged to, after it is determined that the interference is outside fixed interference, send an instruction of disabling the downtilt angle scanning function of the antenna to the antenna control module.

The interference azimuth determination module is arranged to set a configuration frequency of a Phase-Locked Loop PLL to be within the uplink band of the useful signal band, perform scanning in the entire bandwidth of the base station, record values of broadband receiving power and narrowband receiving power received by the base station, and use a frequency corresponding to a value of maximum broadband receiving power and a value of maximum narrowband receiving power as a frequency of the outside fixed interference; and set an uplink frequency of the base station to be the frequency of the outside fixed interference, simultaneously trigger the antenna control module to enable the downtilt angle scanning function of the antenna again, and use a downtilt angle corresponding to a value of maximum broadband receiving power and a value of maximum narrowband receiving power, which are recorded, as an azimuth angle of the source of the outside fixed interference.

The antenna control module is further arranged to, after receiving the instruction of the interference judgment module, disable the downtilt angle scanning function of the antenna; and enable the downtilt angle scanning function of the antenna of the base station again under the trigger of the interference azimuth determination module, adjust the downtilt angle of the antenna, perform scanning and record values of broadband receiving power and narrowband receiving power received by the base station at corresponding downtilt angles.

In addition, as another alternative mode, if the base station supports a smart antenna, an accurate location of the outside fixed interference (which includes the micro signal enhancer) may be accurately obtained through scanning on a horizontal plane and a vertical plane of the smart antenna.

The interference azimuth determination module is further arranged to, after the angle corresponding to the value of maximum broadband receiving power and the value of maximum narrowband receiving power is determined as the azimuth angle of the source of the outside fixed interference, enable scanning of a horizontal plane coverage sector area of the smart antenna, perform scanning from -Y degree to +Y degree, record values of broadband receiving power and narrowband receiving power at each degree of a horizontal plane of the smart antenna, and determine a location of the source of the outside fixed interference according to an angle corresponding to a value of maximum broadband receiving power and a value of maximum narrowband receiving power at each degree of the horizontal plane of the smart antenna, herein Y is an azimuth angle of the source of the outside fixed interference.

One skilled in the art can understand that all or partial steps in the above-mentioned embodiments may be implemented by using a computer program process, the computer program may be stored in a computer-readable storage medium, the computer program is executed on a corresponding hardware platform (e.g., a system, equipment, an apparatus or a device), and when being executed, it includes one or combinations of the steps of the method embodiments.

Alternatively, all or partial steps in the above-mentioned embodiments may also be implemented by using integrated circuits, and these steps may be respectively manufactured into integrated circuit modules, or more modules or steps thereof may be manufactured into a single integrated circuit module to implement. Therefore, the present invention is not limited to any specific combinations of hardware and software.

Each device/function module/function unit in the above-mentioned embodiments may be implemented by adopting a general-purpose computing device, and they may be integrated on a single computing device and may also be distributed on a network consisting of a plurality of computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

According to the method and the system for locating interference to the base station provided by the above-mentioned embodiments, aiming at the problem that the base station cannot work normally since the current communication base station is interfered, by judging the type of interference and the production causes of sources of interference and rapidly locating the sources of interference, the interference can be decreased or eliminated, the performance of the current networks is improved and the benefits of operators are maintained.

## Claims

1. A method for locating interference to a base station, comprising:
enabling (S101) a downtilt angle scanning function of an antenna of the base station, adjusting (S101) a downtilt angle of the antenna to perform scanning, and recording (S101) values of broadband receiving power and narrowband receiving power received by the base station at corresponding downtilt angles;
the method further comprising:
judging whether the values of the broadband receiving power and the narrowband receiving power change with change of the downtilt angle of the antenna; if the values of the broadband receiving power and the narrowband receiving power do not change with the downtilt angle of the antenna, the values of both the broadband receiving power and the narrowband receiving power decrease after a downlink transmission channel of the base station is turned off and interference signals disappear, determining that a source of interference is inside the base station; and if the values of the broadband receiving power and the narrowband receiving power change with the downtilt angle of the antenna and the values of both the broadband receiving power and the narrowband receiving power do not change after the downlink transmission channel of the base station is turned off, determining that the source of interference is outside the base station.

2. The method according to claim 1, wherein:
before the step of enabling the downtilt angle scanning function of the antenna of the base station, the method further comprises:
judging (S201) whether a call drop rate of Radio Resource Control, RRC, subscribers exceeds a preset call drop threshold; and if the call drop rate of the RRC subscribers exceeds the preset call drop threshold, detecting the values of the broadband receiving power and the narrowband receiving power received by the base station, and enabling the downtilt angle scanning function of the antenna of the base station if any one of preset conditions is satisfied, wherein the preset conditions comprise that:
the value of the narrowband receiving power exceeds a preset narrowband receiving power threshold; and
the value of the broadband receiving power exceeds a preset broadband receiving power threshold.

3. The method according to claim 1, wherein after the step of determining that the source of interference is inside the base station, the method further comprises:
calculating (S404) an intermodulation frequency of an intermodulation product in an entire bandwidth and a useful signal band;
setting (S405) a downlink frequency of the base station to be upper and lower boundary frequencies of a downlink band in the useful signal band, setting (S405) transmitting power of the base station to be half of rated power of the base station, and setting (S405) an uplink frequency of the base station to be the intermodulation frequency; and
when it is judged that the value of the broadband receiving power exceeds the preset broadband receiving power threshold and/or the value of the narrowband receiving power exceeds the preset narrowband receiving power threshold, determining (S406) that the source of interference is an antenna feed system of the base station;
wherein the step of calculating the intermodulation frequency of the intermodulation product in the entire bandwidth and the useful signal band comprises:
calculating (S404) the intermodulation frequency f=m*F1±n*F2, judging (S404) whether f falls into an uplink band within the useful signal band or within a band of the entire bandwidth, and if f falls into the uplink band within the useful signal band or within the band of the entire bandwidth, recording (S404) a frequency which falls into the corresponding band as the intermodulation frequency,
where F1 and F2 are respectively the upper and lower boundary frequencies of the downlink band within the useful signal band, values of m and n are integers of 0-7 and m and n are not 0 at the same time.

4. The method according to claim 1, wherein after the step of determining that the source of interference is outside the base station, the method further comprises:
when it is judged that the values of the broadband receiving power and the narrowband receiving power change with the downtilt angle of the antenna and the values of both the broadband receiving power and the narrowband receiving power do not change after the downlink transmission channel of the base station is turned off, judging (S203) whether the interference signals disappear when the downlink transmission channel of the base station is turned off; and if the interference signals disappear, determining (S203) that the source of interference outside the base station is a micro signal enhancer; and
using (S204) a downtilt angle corresponding to a maximum value of broadband receiving power and a maximum value of narrowband receiving power, which are recorded, as an azimuth angle of the source of interference outside the base station.

5. The method according to claim 4, wherein after the step of determining that the source of interference outside the base station is the micro signal enhancer, the method further comprises:
acquiring a value of transmitting power of the source of interference outside the base station and a value of broadband receiving power received by the base station;
calculating (S205) spatial attenuation RL of interference outside the base station, which equals to the transmitting power of the source of interference outside the base station minus the broadband receiving power received by the base station; and
obtaining a distance between the source of interference outside the base station and the base station according to a channel transmission model formula.

6. The method according to claim 1, wherein after the step of determining that the source of interference is outside the base station, the method further comprises:
disabling (S303) the downtilt angle scanning function of the antenna;
setting (S304) a configuration frequency of a Phase-Locked Loop, PLL, to be within the uplink band in the useful signal band, scanning (S304) in the entire bandwidth of the base station, and recording (S304) the values of the broadband receiving power and the narrowband receiving power received by the base station, then using (S304) a frequency corresponding to a maximum value of broadband receiving power and a maximum value of narrowband receiving power as a frequency of interference outside the base station;
setting (S304) an uplink frequency of the base station to be the frequency of interference outside the base station, simultaneously enabling (S304) the downtilt angle scanning function of the antenna again, adjusting (S304) the downtilt angle of the antenna, to performing scanning, and recording (S304) values of the broadband receiving power and the narrowband receiving power received by the base station at the corresponding downtilt angles, and then using (S304) a downtilt angle corresponding to a maximum value of broadband receiving power and a maximum value of narrowband receiving power, which are recorded, as an azimuth angle of the source of interference outside the base station.

7. The method according to claim 4, 5 or 6, wherein the antenna is a smart antenna, and after the step of using the downtilt angle corresponding to the maximum value of broadband receiving power and the maximum value of narrowband receiving power as the azimuth angle of the source of interference outside the base station, the method further comprises:
enabling (S305) a scanning function of a horizontal plane coverage sector area of the smart antenna, performing scanning from -Y degree to +Y degree, recording (S305) values of broadband receiving power and narrowband receiving power at each degree of a horizontal plane of the smart antenna, and determining (S305) a location of the source of interference outside the base station according to an angle corresponding to a maximum value of maximum broadband receiving power and a maximum value of maximum narrowband receiving power at each degree of the horizontal plane of the smart antenna, wherein Y is an azimuth angle of the source of interference outside the base station.

8. A system for locating interference to a base station, comprising:
an antenna control module arranged to enable a downtilt angle scanning function of an antenna of the base station, adjust a downtilt angle of the antenna to perform scanning and record values of broadband receiving power and narrowband receiving power received by the base station at corresponding downtilt angles;
wherein the system further comprises an interference judgement module arranged to judge whether the values of the broadband receiving power and the narrowband receiving power change with the downtilt angle of the antenna; if the values of the broadband receiving power and the narrowband receiving power do not change with the downtilt angle of the antenna, the values of both the broadband receiving power and the narrowband receiving power decrease after the downlink transmission channel of the base station is turned off and interference signals disappear, determine that a source of interference is inside the base station; and if the values of the broadband receiving power and the narrowband receiving power change with the downtilt angle of the antenna and the values of both the broadband receiving power and the narrowband receiving power do not change after the downlink transmission channel of the base station is turned off, determine that the source of interference is outside the base station.

9. The system according to claim 8, wherein the system further comprises:
a receiving power detection module arranged to, before the downtilt angle scanning function of the antenna of the base station is enabled, judge whether a call drop rate of Radio Resource Control RRC subscribers exceeds a preset call drop threshold; and if the call drop rate of the RRC subscribers exceeds the preset call drop threshold, detect the broadband receiving power and the narrowband receiving power received by the base station; and
the antenna control module is further arranged to enable the downtilt angle scanning function of the antenna of the base station if any one of the following preset conditions is satisfied:
the value of the narrowband receiving power exceeds a preset narrowband receiving power threshold; and
the value of the broadband receiving power exceeds a preset broadband receiving power threshold.

10. The system according to claim 8, wherein:
the interference judgment module is further arranged to, after it is determined that the source of interference is inside the base station, calculate an intermodulation frequency of an intermodulation product in an entire bandwidth and a useful signal band;
set a downlink frequency of the base station to be two, upper and lower, boundary frequencies of a downlink band in the useful signal band, set transmitting power of the base station to be half of rated power of the base station, and set an uplink frequency of the base station to be the intermodulation frequency; and
judge again whether the broadband receiving power received by the base station exceeds the preset broadband receiving power threshold and/or the narrowband receiving power exceeds the preset narrowband receiving power threshold, and if the broadband receiving power received by the base station exceeds the preset broadband receiving power threshold and/or the narrowband receiving power exceeds the preset narrowband receiving power threshold, then determine that the source of interference is an antenna feed system of the base station;
wherein:
the interference judgment module is further arranged to calculate the intermodulation frequency of the intermodulation product in the entire bandwidth and the useful signal band according to the following mode:
calculating the frequency f=m*F1±n*F2, judging whether f falls into an uplink band within the useful signal band or within a band of the entire bandwidth, and if f falls into the uplink band within the useful signal band or within the band of the entire bandwidth, recording a frequency which falls into the corresponding band as the intermodulation frequency,
where F1 and F2 are respectively the upper and lower boundary frequencies of the downlink band within the useful signal band, values of m and n are integers of 0-7 and m and n are not 0 at the same time.

11. The system according to claim 8, wherein the system further comprises an interference azimuth determination module connected with the interference judgment module, wherein:
the interference judgment module is further arranged to, after it is determined that the source of interference is outside the base station, when it is judged that the values of the broadband receiving power and the narrowband receiving power change with the downtilt angle of the antenna and values of both the broadband receiving power and the narrowband receiving power both do not change after the downlink transmission channel of the base station is turned off, judge whether interference signals disappear when the downlink transmission channel of the base station is turned off, and if the interference signals disappear, determine that the source of interference is a micro signal enhancer; and
the interference azimuth determination module is arranged to use a downtilt angle corresponding to a maximum value of broadband receiving power and a maximum value of narrowband receiving power, which are recorded, as an azimuth angle of the source of interference outside the base station;
or
wherein the interference azimuth determination module is arranged to acquire transmitting power of the source of interference outside the base station and broadband receiving power received by the base station;
calculate spatial attenuation RL of outside fixed interference outside the base station, which equals to the transmitting power of the source of interference outside the base station minus the broadband receiving power received by the base station; and
obtain a distance between the source of interference outside the base station and the base station according to a channel transmission model formula.

12. The system according to claim 8, wherein the system further comprises an interference azimuth determination module connected with the interference judgment module, wherein:
the interference judgment module is further arranged to, after it is determined that the source of interference is outside the base station, send an instruction of disabling the downtilt angle scanning function of the antenna to the antenna control module;
the interference azimuth determination module is arranged to set a configuration frequency of a Phase-Locked Loop PLL, to be within the uplink band of the useful signal band, perform scanning in the entire bandwidth of the base station, and record the values of the broadband receiving power and the narrowband receiving power received by the base station, and then use a frequency corresponding to a maximum value of maximum broadband receiving power and a maximum value of maximum narrowband receiving power as a frequency of the outside fixed interference; and set an uplink frequency of the base station to be the frequency of the outside fixed interference, simultaneously trigger the antenna control module to enable the downtilt angle scanning function of the antenna again, and use a downtilt angle corresponding to a maximum value of broadband receiving power and a maximum value of narrowband receiving power, which are recorded, as an azimuth angle of the source of interference outside the base station; and
the antenna control module is further arranged to, after receiving the instruction of the interference judgment module, disable the downtilt angle scanning function of the antenna; and enable the downtilt angle scanning function of the antenna of the base station again under the trigger of the interference azimuth determination module, adjust the downtilt angle of the antenna to perform scanning, and record values of broadband receiving power and narrowband receiving power received by the base station at corresponding downtilt angles.

13. The system according to claim 11 or 12, wherein:
the antenna is a smart antenna, and the interference azimuth determination module is further arranged to, after the angle corresponding to the value of maximum broadband receiving power and the value of maximum narrowband receiving power is determined as the azimuth angle of the source of the outside fixed interference, enable a scanning of a horizontal plane coverage sector area of the smart antenna, perform scanning from -Y degree to +Y degree, record values of broadband receiving power and narrowband receiving power at each degree of a horizontal plane of the smart antenna, and determine a location of the source of interference outside the base station according to an angle corresponding to a value of maximum broadband receiving power and a value of maximum narrowband receiving power at each degree of the horizontal plane of the smart antenna, wherein Y is an azimuth angle of the source of interference outside the base station.

## Patentansprüche

1. Verfahren zum Lokalisieren von Störungen zu einer Basisstation, umfassend:
Aktivieren (S101) einer Abwärtsneigungswinkel-Abtastfunktion einer Antenne der Basisstation,
Einstellen (S101) eines Abwärtsneigungswinkels der Antenne zum Durchführen der Abtastung und Aufzeichnen (S101) der Werte der von der Basisstation empfangenen Breitband-Empfangsleistung und Schmalband-Empfangsleistung in entsprechenden Abwärtsneigungswinkeln;
wobei das Verfahren weiter umfasst:
Beurteilen, ob die Werte der Breitband-Empfangsleistung und der Schmalband-Empfangsleistung sich bei Änderung des Abwärtsneigungswinkels der Antenne ändern; wenn die Werte der Breitband-Empfangsleistung und der Schmalband-Empfangsleistung sich nicht mit dem Abwärtsneigungswinkel der Antenne ändern, nehmen die Werte sowohl der Breitband-Empfangsleistung als auch der Schmalband-Empfangsleistung ab, nachdem ein Downlink-Übertragungskanal der Basisstation ausgeschaltet wurde und Störsignale verschwinden, Bestimmen, dass eine Störungsquelle sich in der Basisstation befindet; und wenn die Werte der Breitband-Empfangsleistung und der Schmalband-Empfangsleistung sich mit dem Abwärtsneigungswinkel der Antenne ändern und die Werte sowohl der Breitband-Empfangsleistung als auch der Schmalband-Empfangsleistung sich nicht ändern, nachdem der Downlink-Übertragungskanal der Basisstation ausgeschaltet wurde, Bestimmen, dass die Störungsquelle sich außerhalb der Basisstation befindet.

2. Verfahren nach Anspruch 1, wobei:
das Verfahren vor dem Schritt des Aktivierens der Abwärtsneigungswinkel-Abtastfunktion der Antenne der Basisstation weiter umfasst:
Beurteilen (S201), ob eine Anrufabbruchrate von Radio Resource Control-(RRC)-Teilnehmern einen voreingestellten Anrufabbruch-Schwellenwert überschreitet; und wenn die Anrufabbruchrate der RRC-Teilnehmer den voreingestellten Anrufabbruch-Schwellenwert überschreitet, Erfassen der Werten der von der Basisstation empfangenen Breitband-Empfangsleistung und der Schmalband-Empfangsleistung und Aktivieren der Abwärtsneigungswinkel-Abtastfunktion der Antenne der Basisstation, wenn eine der voreingestellten Bedingungen erfüllt ist, wobei die voreingestellten Bedingungen umfassen, dass
der Wert der Schmalband-Empfangsleistung einen voreingestellten Schmalband-Empfangsleistungsschwellenwert überschreitet; und
der Wert der Breitband-Empfangsleistung einen voreingestellten Breitband-Empfangsleistungsschwellenwert überschreitet.

3. Verfahren nach Anspruch 1, wobei das Verfahren nach dem Schritt des Bestimmens, dass die Störungsquelle sich innerhalb der Basisstation befindet, weiter umfasst:
Berechnen (S404) einer Intermodulationsfrequenz eines Intermodulationsprodukts in einer gesamten Bandbreite und einem Nutzsignalband;
Einstellen (S405) einer Downlink-Frequenz der Basisstation als obere und untere Grenzfrequenz eines Downlink-Bandes im Nutzsignalband, Einstellen (S405) der Übertragungsleistung der Basisstation auf die halbe Nennleistung der Basisstation und Einstellen (S405) einer Uplink-Frequenz der Basisstation als Intermodulationsfrequenz; und
wenn beurteilt wird, dass der Wert der Breitband-Empfangsleistung den voreingestellten Breitband-Empfangsleistungsschwellenwert überschreitet und/oder der Wert der Schmalband-Empfangsleistung den voreingestellten Schmalband-Empfangsleistungsschwellenwert überschreitet, Bestimmen (S406), dass die Störungsquelle ein Antennenzuführungssystem der Basisstation ist;
wobei der Schritt des Berechnens der Intermodulationsfrequenz des Intermodulationsprodukts in der gesamten Bandbreite und dem Nutzsignalband umfasst:
Berechnen (S404) der Intermodulationsfrequenz f=m*F1±n*F2, Beurteilen (S404), ob f unter ein Uplink-Band innerhalb des Nutzsignalbandes oder unter ein Band der gesamten Bandbreite fällt und falls f unter das Uplink-Band innerhalb des Nutzsignalbandes oder innerhalb des Bandes der gesamten Bandbreite fällt, Aufzeichnen (S404) einer Frequenz, die unter das entsprechende Band als Intermodulationsfrequenz fällt,
wobei F1 und F2 jeweils die oberen und unteren Grenzfrequenzen des Downlink-Bandes innerhalb des Nutzsignalbandes sind, die Werte für m und n ganze Zahlen von 0-7 sind und m und n nicht gleichzeitig 0 sind.

4. Verfahren nach Anspruch 1, wobei das Verfahren nach dem Schritt des Bestimmens, dass die Störungsquelle sich außerhalb der Basisstation befindet, weiter umfasst:
wenn beurteilt wird, dass die Werte der Breitband-Empfangsleistung und der Schmalband-Empfangsleistung sich mit dem Abwärtsneigungswinkel der Antenne ändern und die Werte sowohl der Breitband-Empfangsleistung als auch der Schmalband-Empfangsleistung sich nicht ändern, nachdem der Downlink-Übertragungskanal der Basisstation ausgeschaltet wurde, Bestimmen (S203), ob das Störsignal verschwindet, wenn der Downlink-Übertragungskanal der Basisstation ausgeschaltet wird; und wenn das Störsignal verschwindet, Bestimmen (S203), dass die Störungsquelle außerhalb der Basisstation ein Mikrosignalverstärker ist, und,
Verwenden (S204) eines Abwärtsneigungswinkels, der einem Höchstwert an Breitband-Empfangsleistung und einem Höchstwert an Schmalband-Empfangsleistung entspricht, die als ein Azimutwinkel der Störungsquelle außerhalb der Basisstation aufgezeichnet werden.

5. Verfahren nach Anspruch 4, wobei das Verfahren nach dem Schritt des Bestimmens, dass die Störungsquelle außerhalb der Basisstation der Mikroverstärker ist, weiter umfasst:
Erfassen eines Wertes der Übertragungsleistung der Störungsquelle außerhalb der Basisstation und eines Wertes der von der Basisstation empfangenen Breitband-Empfangsleistung;
Berechnen (S205) der räumlichen Abschwächung RL der Störung außerhalb der Basisstation, was der Übertragungsleistung der Störungsquelle außerhalb der Basisstation abzüglich der von der Basisstation empfangenen Breitband-Empfangsleistung entspricht; und
Erhalten eines Abstandes zwischen der Störungsquelle außerhalb der Basisstation und der Basisstation entsprechend einer Kanalübertragungsmodellformulierung.

6. Verfahren nach Anspruch 1, wobei das Verfahren nach dem Schritt des Festlegens, dass die Störungsquelle sich außerhalb der Basisstation befindet, weiter umfasst:
Deaktivieren (S303) der Abwärtsneigungswinkel-Abtastfunktion der Antenne;
Einstellen (S304) einer Konfigurationsfrequenz eines Phase-Locked Loop (PLL), der innerhalb des Uplink-Bandes in dem Nutzsignalband sein soll, Abtasten (S304) der gesamten Bandbreite der Basisstation und Aufzeichnen (S304) der Werte der von der Basisstation empfangenen Breitband-Empfangsleistung und der Schmalband-Empfangsleistung, anschließendes Verwenden (S304) einer Frequenz, die einem Höchstwert an Breitband-Empfangsleistung und einem Höchstwert an Schmalband-Empfangsleistung als eine Störfrequenz außerhalb der Basisstation entspricht;
Einstellen (S304) einer Uplink-Frequenz der Basisstation, die die Störfrequenz außerhalb der Basisstation sein soll, gleichzeitiges erneutes Aktivieren (S304) der Abwärtsneigungswinkel-Abtastfunktion der Antenne, Einstellen (S304) des Abwärtsneigungswinkels der Antenne, um das Abtasten vorzunehmen und Aufzeichnen (S304) der Werte der von der Basisstation in den entsprechenden Abwärtsneigungswinkeln empfangenen Breitband-Empfangsleistung und Schmalband-Empfangsleistung und anschließendes Verwenden (S304) eines Abwärtsneigungswinkels, der einem Höchstwert an Breitband-Empfangsleistung und einem Höchstwert an Schmalband-Empfangsleistung entspricht, die als ein Azimutwinkel der Störungsquelle außerhalb der Basisstation aufgezeichnet werden.

7. Verfahren nach Anspruch 4, 5 oder 6, wobei die Antenne eine intelligente Antenne ist und das Verfahren nach dem Schritt des Verwendens des Abwärtsneigungswinkels, der dem Höchstwert an Breitband-Empfangsleistung und dem Höchstwert an Schmalband-Empfangsleistung als der Azimutwinkel der Störungsquelle außerhalb der Basisstation entspricht, weiter umfasst:
Aktivieren (S305) einer Abtastfunktion eines Horizontalebene-Deckungssektorbereichs der intelligenten Antenne, Ausführen des Abtastens vom -Y-Grad zum +Y-Grad, Aufzeichnen (S305) der Werte der Breitband-Empfangsleistung und der Schmalband-Empfangsleistung bei jedem Grad einer Horizontalebene der intelligenten Antenne und Bestimmen (S305) einer Position der Störungsquelle außerhalb der Basisstation entsprechend einem Winkel, der einem Höchstwert an Breitband-Empfangsleistung und einem Höchstwert an Schmalband-Empfangsleistung bei jedem Grad der Horizontalebene der intelligenten Antenne entspricht, wobei Y ein Azimutwinkel der Störungsquelle außerhalb der Basisstation ist.

8. System zum Lokalisieren von Störungen zu einer Basisstation, umfassend:
ein Antennensteuermodul, das angeordnet ist, um eine Abwärtsneigungswinkel-Abtastfunktion einer Antenne der Basisstation zu aktivieren, Einstellen eines Abwärtsneigungswinkels einer Antenne, um das Abtasten und Aufzeichnen von Werten der von der Basisstation an entsprechenden Abwärtsneigungswinkeln empfangenen Breitband-Empfangsleistung und der Schmalband-Empfangsleistung auszuführen; wobei das System weiter umfasst:
ein Störungsbeurteilungsmodul, das angeordnet ist, um festzustellen, ob die Werte der Breitband Empfangsleistung und der Schmalband-Empfangsleistung sich mit dem Abwärtsneigungswinkel der Antenne ändern; wenn die Werte der Breitband-Empfangsleistung und der Schmalband-Empfangsleistung sich nicht mit dem Abwärtsneigungswinkel der Antenne ändern, nehmen die Werte sowohl der Breitband-Empfangsleistung als auch der Schmalband-Empfangsleistung ab, nachdem ein Downlink-Übertragungskanal der Basisstation ausgeschaltet wurde und die Störsignale verschwinden, Bestimmen, dass eine Störungsquelle sich in der Basisstation befindet;
und wenn die Werte der Breitband-Empfangsleistung und der Schmalband-Empfangsleistung sich mit dem Abwärtsneigungswinkel der Antenne ändern und die Werte sowohl der Breitband-Empfangsleistung als auch der Schmalband-Empfangsleistung sich nicht ändern, nachdem der Downlink-Übertragungskanal der Basisstation ausgeschaltet wurde, Bestimmen, dass die Störungsquelle sich außerhalb der Basisstation befindet.

9. System nach Anspruch 8, wobei das System weiter umfasst:
ein Empfangsleistungserfassungsmodul, das angeordnet ist, um vor Aktivieren der Abwärtsneigungswinkel-Abtastfunktion der Antenne der Basisstation zu beurteilen, ob eine Anrufabbruchrate von Radio Resource Control-(RRC)-Teilnehmern einen voreingestellten Anrufabbruch-Schwellenwert überschreitet; und wenn die Anrufabbruchrate von RRC-Teilnehmern den voreingestellten Anrufabbruch-Schwellenwert überschreitet, Erfassen der von der Basisstation empfangenen Breitband-Empfangsleistung und der Schmalband-Empfangsleistung; und
das Antennensteuermodul ist weiter angeordnet, um die Abwärtsneigungswinkel-Abtastfunktion der Antenne der Basisstation zu aktivieren, wenn eine der folgenden Bedingungen erfüllt ist:
der Wert der Schmalband-Empfangsleistung überschreitet einen voreingestellten Schmalband-Empfangsleistungsschwellenwert; und
der Wert der Breitband-Empfangsleistung überschreitet einen voreingestellten Breitband-Empfangsleistungsschwellenwert.

10. System nach Anspruch 8, wobei:
das Störungsbeurteilungsmodul weiter angeordnet ist, um nach Bestimmen, dass die Störungsquelle sich innerhalb der Basisstation befindet, eine Intermodulationsfrequenz eines Intermodulationsprodukts in einer gesamten Bandbreite und einem Nutzsignalband zu berechnen;
Einstellen einer Downlink-Frequenz der Basisstation als zwei, d.h. obere und untere, Grenzfrequenzen eines Downlink-Bandes im Nutzsignalband, Einstellen der Übertragungsleistung der Basisstation auf die halbe Nennleistung der Basisstation, und Einstellen einer Uplink-Frequenz der Basisstation als Intermodulationsfrequenz; und
erneutes Beurteilen, ob die von der Basisstation empfangene Breitband-Empfangsleistung den voreingestellten Breitband-Empfangsleistungsschwellenwert und/oder ob die Schmalband-Empfangsleistung den voreingestellten Schmalband-Empfangsleistungsschwellenwert überschreitet, und wenn die von der Basisstation empfangene Breitband-Empfangsleistung den voreingestellten Breitband-Empfangsleistungsschwellenwert und/oder die Schmalband-Empfangsleistung den voreingestellten Schmalband-Empfangsleistungsschwellenwert überschreitet, Bestimmen, dass die Störungsquelle ein Antennenzuführungssystem der Basisstation ist;
wobei:
das Störungsbeurteilungsmodul weiter angeordnet ist, um die Intermodulationsfrequenz des Intermodulationsprodukts in der gesamten Bandbreite und in dem Nutzsignalband auf folgende Weise zu berechnen:
Berechnen der Frequenz f=m*F1±n*F2, Beurteilen, ob f unter ein Uplink-Band innerhalb des Nutzsignalbandes oder unter ein Band der gesamten Bandbreite fällt und falls f unter das Uplink-Band innerhalb des Nutzsignalbandes oder innerhalb des Bandes der gesamten Bandbreite fällt, Aufzeichnen einer Frequenz, die unter das entsprechende Band als Intermodulationsfrequenz fällt,
wobei F1 und F2 jeweils die oberen und unteren Grenzfrequenzwerte des Downlink-Bandes innerhalb des Nutzsignalbandes sind, die Werte für m und n ganze Zahlen von 0-7 sind und m und n nicht gleichzeitig 0 sind.

11. System nach Anspruch 8, wobei das System weiter ein Störungsazimutbestimmungsmodul umfasst, das mit dem Störungsbeurteilungsmodul verbunden ist, wobei:
das Störungsbeurteilungsmodul weiter angeordnet ist um, nachdem bestimmt wurde, dass die Störungsquelle sich außerhalb der Basisstation befindet, wenn beurteilt wird, dass die Werte der Breitband-Empfangsleistung und der Schmalband-Empfangsleistung sich mit dem Abwärtsneigungswinkel der Antenne ändern und die Werte sowohl der Breitband-Empfangsleistung als auch der Schmalband-Empfangsleistung sich nicht ändern, nachdem der Downlink-Übertragungskanal der Basisstation ausgeschaltet wurde, Beurteilen, ob das Störungssignal verschwindet, wenn der Downlink-Übertragungskanal der Basisstation ausgeschaltet wird; und wenn das Störungssignal verschwindet, Bestimmen, dass die Störungsquelle ein Mikrosignalverstärker ist; und
das Störungsazimutbestimmungsmodul angeordnet ist, um einen Abwärtsneigungswinkel zu verwenden, der einem Höchstwert an Breitband-Empfangsleistung und einem Höchstwert an Schmalband-Empfangsleistung entspricht, die als ein Azimutwinkel der Störungsquelle außerhalb der Basisstation aufgezeichnet werden;
oder
wobei das Störungsazimutbestimmungsmodul angeordnet ist, um die Übertragungsleistung der Störungsquelle außerhalb der Basisstation und die von der Basisstation empfangene Breitband-Empfangsleistung zu erfassen;
Berechnen der räumlichen Abschwächung RL außerhalb festgelegter Störungen außerhalb der Basisstation, was der Übertragungsleistung der Störungsquelle außerhalb der Basisstation abzüglich der von der Basisstation empfangenen Breitband-Empfangsleistung entspricht; und
Erhalten eines Abstands zwischen der Störungsquelle außerhalb der Basisstation und der Basisstation entsprechend einer Kanalübertragungsmodellformulierung.

12. System nach Anspruch 8, wobei das System weiter ein Störungsazimutbestimmungsmodul umfasst, das mit dem Störungsbeurteilungsmodul verbunden ist, wobei:
das Störungsbeurteilungsmodul weiter angeordnet ist, um nach dem Bestimmen, dass die Störungsquelle sich außerhalb der Basisstation befindet, eine Anweisung zum Deaktivieren der Abwärtsneigungswinkel-Abtastfunktion der Antenne an das Antennensteuermodul zu senden;
das Störungsazimutbestimmungsmodul angeordnet ist, um eine Konfigurationsfrequenz eines Phase-Locked Loop (PLL) einzustellen, der innerhalb des Uplink-Bandes des Nutzsignalbandes sein soll, das Abtasten der gesamten Bandbreite der Basisstation vorzunehmen und die Werte der von der Basisstation empfangenen Breitband-Empfangsleistung und der Schmalband-Empfangsleistung aufzuzeichnen und anschließend eine Frequenz zu verwenden, die einem Höchstwert an Breitband-Empfangsleistung und einem Höchstwert an Schmalband-Empfangsleistung als eine Frequenz der außerhalb festgelegten Störung entspricht; und Einstellen einer Uplink-Frequenz der Basisstation, die die Frequenz der außerhalb festgelegten Störung sein soll, gleichzeitiges Triggern des Antennensteuermoduls, um die Abwärtsneigungswinkel-Abtastfunktion der Antenne wieder zu aktivieren und Verwenden eines Abwärtsneigungswinkels, der einem Höchstwert an Breitband-Empfangsleistung und einem Höchstwert an Schmalband-Empfangsleistung entspricht, die als ein Azimutwinkel der Störungsquelle außerhalb der Basisstation aufgezeichnet werden; und das Antennensteuermodul weiter angeordnet ist, um nach dem Empfangen von Anweisungen des Störungsbeurteilungsmoduls die Abwärtsneigungswinkel-Abtastfunktion der Antenne zu deaktivieren; und
die Abwärtsneigungswinkel-Abtastfunktion der Antenne der Basisstation unter der Triggerung des Störungsazimutbestimmungsmoduls zu aktivieren; den Abwärtsneigungswinkel der Antenne einzustellen, um das Abtasten auszuführen und die Werte der von der Basisstation bei entsprechenden Abwärtsneigungswinkeln empfangenen Breitband-Empfangsleistung und Schmalband-Empfangsleistung aufzuzeichnen.

13. System nach Anspruch 11 oder 12, wobei die Antenne eine intelligente Antenne ist und das Störungsazimutbestimmungsmodul weiter angeordnet ist, um nach dem Bestimmen des Winkels, der dem Höchstwert an Breitband-Empfangsleistung und dem Höchstwert an Schmalband-Empfangsleistung als Azimutwinkel der Quelle der außerhalb festgelegten Störung entspricht, das Abtasten eines Horizontalebene-Deckungssektorbereichs der intelligenten Antenne zu aktivieren, das Abtasten vom -Y-Grad zum +Y-Grad auszuführen, die Werte der Breitband-Empfangsleistung und der Schmalband-Empfangsleistung bei jedem Grad einer Horizontalebene der intelligenten Antenne aufzuzeichnen und eine Position der Störungsquelle außerhalb der Basisstation entsprechend einem Winkel zu bestimmen, der einem Höchstwert an Breitband-Empfangsleistung und einem Höchstwert an Schmalband-Empfangsleistung bei jedem Grad der Horizontalebene der intelligenten Antenne entspricht, wobei Y ein Azimutwinkel der Störungsquelle außerhalb der Basisstation ist.

## Revendications

1. Procédé pour localiser un brouillage au niveau d'une station de base, comprenant :
l'activation (S101) d'une fonction de balayage d'angle d'inclinaison vers le bas d'une antenne de la station de base,
l'ajustement (S101) d'un angle d'inclinaison vers le bas de l'antenne pour effectuer un balayage, et l'enregistrement (S101) de valeurs de puissance de réception à large bande et de puissance de réception à bande étroite reçues par la station de base au niveau d'angles d'inclinaison vers le bas correspondants ;
le procédé comprenant en outre :
le fait de juger si les valeurs de la puissance de réception à large bande et la puissance de réception à bande étroite changent avec un changement de l'angle d'inclinaison vers le bas de l'antenne ; si les valeurs de la puissance de réception à large bande et la puissance de réception à bande étroite ne changent pas avec l'angle d'inclinaison vers le bas de l'antenne, les valeurs à la fois de la puissance de réception à large bande et de la puissance de réception à bande étroite diminuent après qu'un canal de transmission de liaison descendante de la station de base est éteint et des signaux de brouillage disparaissent, la détermination qu'une source de brouillage est à l'intérieur de la station de base ; et si les valeurs de la puissance de réception à large bande et la puissance de réception à bande étroite changent avec l'angle d'inclinaison vers le bas de l'antenne et les valeurs à la fois de la puissance de réception à large bande et de la puissance de réception à bande étroite ne changent pas après que le canal de transmission de liaison descendante de la station de base est éteint, la détermination que la source de brouillage est à l'extérieur de la station de base.

2. Procédé selon la revendication 1, dans lequel :
avant l'étape d'activation de la fonction de balayage d'angle d'inclinaison vers le bas de l'antenne de la station de base, le procédé comprend en outre :
le fait de juger (S201) si un taux d'abandon d'appel d'abonnés de commande de ressources radio, RRC (Radio Resource Control), dépasse un seuil d'abandon d'appel prédéfini ; et si le taux d'abandon d'appel des abonnés RRC dépasse le seuil d'abandon d'appel prédéfini, la détection des valeurs de la puissance de réception à large bande et de la puissance de réception à bande étroite reçues par la station de base, et l'activation de la fonction de balayage d'angle d'inclinaison vers le bas de l'antenne de la station de base si l'une quelconque de conditions prédéfinies est satisfaite, dans lequel les conditions prédéfinies comprennent le fait que :
la valeur de la puissance de réception à bande étroite dépasse un seuil de puissance de réception à bande étroite prédéfini ; et
la valeur de la puissance de réception à large bande dépasse un seuil de puissance de réception à large bande prédéfini.

3. Procédé selon la revendication 1, dans lequel après l'étape de détermination que la source de brouillage est à l'intérieur de la station de base, le procédé comprend en outre :
le calcul (S404) d'une fréquence d'intermodulation d'un produit d'intermodulation dans une largeur de bande complète et une bande de signal utile ;
le réglage (S405) d'une fréquence de liaison descendante de la station de base pour qu'elle soit des fréquences de limite supérieure et inférieure d'une bande de liaison descendante dans la bande de signal utile, le réglage (S405) d'une puissance de transmission de la station de base pour qu'elle soit la moitié d'une puissance nominale de la station de base, et le réglage (S405) d'une fréquence de liaison montante de la station de base pour qu'elle soit la fréquence d'intermodulation ; et
quand il est jugé que la valeur de la puissance de réception à large bande dépasse le seuil de puissance de réception à large bande prédéfini et/ou la valeur de la puissance de réception à bande étroite dépasse le seuil de puissance de réception à bande étroite prédéfini, la détermination (S406) que la source de brouillage est un système d'alimentation d'antenne de la station de base ;
dans lequel l'étape de calcul de la fréquence d'intermodulation du produit d'intermodulation dans la largeur de bande complète et la bande de signal utile comprend :
le calcul (S404) de la fréquence d'intermodulation f=m*F1±n*F2, le fait de juger (S404) si f se trouve dans une bande de liaison montante à l'intérieur de la bande de signal utile ou à l'intérieur d'une bande de la largeur de bande complète, et si f se trouve dans la bande de liaison montante à l'intérieur de la bande de signal utile ou à l'intérieur de la bande de la largeur de bande complète, l'enregistrement (S404) d'une fréquence qui se trouve dans la bande correspondante comme la fréquence d'intermodulation,
où F1 et F2 sont respectivement les fréquences de limite supérieure et inférieure de la bande de liaison descendante à l'intérieur de la bande de signal utile, des valeurs de m et n sont des entiers de 0 à 7 et m et n ne sont pas 0 en même temps.

4. Procédé selon la revendication 1, dans lequel, après l'étape de détermination que la source de brouillage est à l'extérieur de la station de base, le procédé comprend en outre :
quand il est jugé que les valeurs de la puissance de réception à large bande et la puissance de réception à bande étroite changent avec l'angle d'inclinaison vers le bas de l'antenne et les valeurs à la fois de la puissance de réception à large bande et la puissance de réception à bande étroite ne changent pas après que le canal de transmission de liaison descendante de la station de base est éteint, le fait de juger (S203) si les signaux de brouillage disparaissent quand le canal de transmission de liaison descendante de la station de base est éteint ; et si les signaux de brouillage disparaissent, la détermination (S203) que la source de brouillage à l'extérieur de la station de base est un amplificateur de signal micro ; et
l'utilisation (S204) d'un angle d'inclinaison vers le bas correspondant à une valeur maximale de puissance de réception à large bande et une valeur maximale de puissance de réception à bande étroite, qui sont enregistrées, comme un angle d'azimut de la source de brouillage à l'extérieur de la station de base.

5. Procédé selon la revendication 4, dans lequel après l'étape de détermination que la source de brouillage à l'extérieur de la station de base est l'amplificateur de signal micro, le procédé comprend en outre :
l'acquisition d'une valeur de puissance de transmission de la source de brouillage à l'extérieur de la station de base et d'une valeur de puissance de réception à large bande reçues par la station de base ;
le calcul (S205) d'un RL d'atténuation spatiale de brouillage à l'extérieur de la station de base, qui est égal à la puissance de transmission de la source de brouillage à l'extérieur de la station de base moins la puissance de réception à large bande reçue par la station de base ; et
l'obtention d'une distance entre la source de brouillage à l'extérieur de la station de base et la station de base en fonction d'une formule de modèle de transmission de canal.

6. Procédé selon la revendication 1, dans lequel après l'étape de détermination que la source de brouillage est à l'extérieur de la station de base, le procédé comprend en outre :
la désactivation (S303) de la fonction de balayage d'angle d'inclinaison vers le bas de l'antenne ;
le réglage (S304) d'une fréquence de configuration d'une boucle à verrouillage de phase, PLL (Phase-Locked loop), pour qu'elle soit dans la bande de liaison montante dans la bande de signal utile, le balayage (S304) dans la largeur de bande complète de la station de base, et l'enregistrement (S304) des valeurs de la puissance de réception à large bande et de la puissance de réception à bande étroite reçues par la station de base, puis l'utilisation (S304) d'une fréquence correspondant à une valeur maximale de puissance de réception à large bande et à une valeur maximale de puissance de réception à bande étroite comme une fréquence de brouillage à l'extérieur de la station de base ;
le réglage (S304) d'une fréquence de liaison montante de la station de base pour qu'elle soit la fréquence de brouillage à l'extérieur de la station de base, l'activation simultanée (S304) à nouveau de la fonction de balayage d'angle d'inclinaison vers le bas de l'antenne, l'ajustement (S304) de l'angle d'inclinaison vers le bas de l'antenne, pour effectuer le balayage, et l'enregistrement (S304) de valeurs de la puissance de réception à large bande et de la puissance de réception à bande étroite reçues par la station de base au niveau des angles d'inclinaison vers le bas correspondants, et puis l'utilisation (S304) d'un angle d'inclinaison vers le bas correspondant à une valeur maximale de puissance de réception à large bande et une valeur maximale de puissance de réception à bande étroite, qui sont enregistrées, comme un angle d'azimut de la source de brouillage à l'extérieur de la station de base.

7. Procédé selon la revendication 4, 5 ou 6, dans lequel l'antenne est une antenne intelligente, et après l'étape d'utilisation de l'angle d'inclinaison vers le bas correspondant à la valeur maximale de puissance de réception à large bande et la valeur maximale de puissance de réception à bande étroite comme l'angle d'azimut de la source de brouillage à l'extérieur de la station de base, le procédé comprend en outre :
l'activation (S305) d'une fonction de balayage d'une zone de secteur de couverture de plan horizontal de l'antenne intelligente, l'exécution d'un balayage d'un degré -Y à un degré +Y, l'enregistrement (S305) de valeurs de puissance de réception à large bande et de puissance de réception à bande étroite au niveau de chaque degré d'un plan horizontal de l'antenne intelligente, et la détermination (S305) d'un emplacement de la source de brouillage à l'extérieur de la station de base en fonction d'un angle correspondant à une valeur maximale de puissance de réception à large bande maximale et une valeur maximale de puissance de réception à bande étroite maximale au niveau de chaque degré du plan horizontal de l'antenne intelligente, dans lequel Y est un angle d'azimut de la source de brouillage à l'extérieur de la station de base.

8. Système pour localiser un brouillage au niveau d'une station de base, comprenant :
un module de commande d'antenne agencé pour activer une fonction de balayage d'angle d'inclinaison vers le bas d'une antenne de la station de base, ajuster un angle d'inclinaison vers le bas de l'antenne pour effectuer un balayage et enregistrer des valeurs de puissance de réception à large bande et de puissance de réception à bande étroite reçues par la station de base au niveau d'angles d'inclinaison vers le bas correspondants ;
dans lequel le système comprend en outre
un module de jugement de brouillage agencé pour juger si les valeurs de la puissance de réception à large bande et de la puissance de réception à bande étroite changent avec l'angle d'inclinaison vers le bas de l'antenne ; si les valeurs de la puissance de réception à large bande et la puissance de réception à bande étroite ne changent pas avec l'angle d'inclinaison vers le bas de l'antenne, les valeurs à la fois de la puissance de réception à large bande et de la puissance de réception à bande étroite diminuent après que le canal de transmission de liaison descendante de la station de base est éteint et des signaux de brouillage disparaissent, déterminer qu'une source de brouillage est à l'intérieur de la station de base ; et si les valeurs de la puissance de réception à large bande et de la puissance de réception à bande étroite changent avec l'angle d'inclinaison vers le bas de l'antenne et les valeurs à la fois de la puissance de réception à large bande et de la puissance de réception à bande étroite ne changent pas après que le canal de transmission de liaison descendante de la station de base est éteint, déterminer que la source de brouillage est à l'extérieur de la station de base.

9. Système selon la revendication 8, dans lequel le système comprend en outre :
un module de détection de puissance de réception agencé pour, avant que la fonction de balayage d'angle d'inclinaison vers le bas de l'antenne de la station de base soit activée, juger si un taux d'abandon d'appel d'abonnés de commande de ressources radio, RRC, dépasse un seuil d'abandon d'appel prédéfini ; et si le taux d'abandon d'appel des abonnés RRC dépasse le seuil d'abandon d'appel prédéfini, détecter la puissance de réception à large bande et la puissance de réception à bande étroite reçues par la station de base ; et
le module de commande d'antenne est agencé en outre pour activer la fonction de balayage d'angle d'inclinaison vers le bas de l'antenne de la station de base si l'une quelconque des conditions prédéfinies suivantes est satisfaite :
la valeur de la puissance de réception à bande étroite dépasse un seuil de puissance de réception à bande étroite prédéfini ; et
la valeur de la puissance de réception à large bande dépasse un seuil de puissance de réception à large bande prédéfini.

10. Système selon la revendication 8, dans lequel :
le module de jugement de brouillage est agencé en outre pour, après qu'il est déterminé que la source de brouillage est à l'intérieur de la station de base, calculer une fréquence d'intermodulation d'un produit d'intermodulation dans une largeur de bande complète et une bande de signal utile ;
régler une fréquence de liaison descendante de la station de base pour qu'elle soit deux fréquences de limite, supérieure et inférieure, d'une bande de liaison descendante dans la bande de signal utile, régler une puissance de transmission de la station de base pour qu'elle soit la moitié d'une puissance nominale de la station de base, et régler une fréquence de liaison montante de la station de base pour qu'elle soit la fréquence d'intermodulation ; et
juger à nouveau si la puissance de réception à large bande reçue par la station de base dépasse le seuil de puissance de réception à large bande prédéfini et/ou la puissance de réception à bande étroite dépasse le seuil de puissance de réception à bande étroite prédéfini, et si la puissance de réception à large bande reçue par la station de base dépasse le seuil de puissance de réception à large bande prédéfini et/ou la puissance de réception à bande étroite dépasse le seuil de puissance de réception à bande étroite prédéfini, déterminer alors que la source de brouillage est un système d'alimentation d'antenne de la station de base ;
dans lequel :
le module de jugement de brouillage est agencé en outre pour calculer la fréquence d'intermodulation du produit d'intermodulation dans la largeur de bande complète et la bande de signal utile de la manière suivante :
le calcul de la fréquence f=m*F1±n*F2, le fait de juger si f se trouve dans une bande de liaison montante à l'intérieur de la bande de signal utile ou à l'intérieur d'une bande de la largeur de bande complète, et si f se trouve dans la bande de liaison montante à l'intérieur de la bande de signal utile ou à l'intérieur de la bande de la largeur de bande complète, l'enregistrement de la fréquence qui se trouve dans la bande correspondante comme la fréquence d'intermodulation,
où F1 et F2 sont respectivement les fréquences de limite supérieure et inférieure de la bande de liaison descendante à l'intérieur de la bande de signal utile, des valeurs de m et n sont des entiers de 0 à 7 et m et n ne sont pas 0 en même temps.

11. Système selon la revendication 8, dans lequel le système comprend en outre un module de détermination d'azimut de brouillage connecté au module de jugement de brouillage, dans lequel :
le module de jugement de brouillage est agencé en outre pour, après qu'il est déterminé que la source de brouillage est à l'extérieur de la station de base, quand il est jugé que les valeurs de la puissance de réception à large bande et de la puissance de réception à bande étroite change avec l'angle d'inclinaison vers le bas de l'antenne et des valeurs à la fois de la puissance de réception à large bande et de la puissance de réception à bande étroite ne changent ni l'une ni l'autre après que le canal de transmission de liaison descendante de la station de base est éteint, juger si des signaux de brouillage disparaissent quand le canal de transmission de liaison descendante de la station de base est éteint, et si le signaux de brouillage disparaissent, déterminer que la source de brouillage est un amplificateur de signal micro ; et
le module de détermination d'azimut de brouillage est agencé pour utiliser un angle d'inclinaison vers le bas correspondant à une valeur maximale de puissance de réception à large bande et une valeur maximale de puissance de réception à bande étroite, qui sont enregistrées, comme un angle d'azimut de la source de brouillage à l'extérieur de la station de base ;
ou
dans lequel le module de détermination d'azimut de brouillage est agencé pour acquérir une puissance de transmission de la source de brouillage à l'extérieur de la station de base et une puissance de réception à large bande reçues par la station de base ;
calculer un RL d'atténuation spatiale de brouillage fixe extérieur à l'extérieur de la station de base, qui est égal à la puissance de transmission de la source de brouillage à l'extérieur de la station de base moins la puissance de réception à large bande reçue par la station de base ; et
obtenir une distance entre la source de brouillage à l'extérieur de la station de base et la station de base en fonction d'une formule de modèle de transmission de canal.

12. Système selon la revendication 8, dans lequel le système comprend en outre un module de détermination d'azimut de brouillage connecté au module de jugement de brouillage, dans lequel :
le module de jugement de brouillage est agencé en outre pour, après qu'il est déterminé que la source de brouillage est à l'extérieur de la station de base, envoyer une instruction de désactivation de la fonction de balayage d'angle d'inclinaison vers le bas de l'antenne au module de commande d'antenne ;
le module de détermination d'azimut de brouillage est agencé pour régler une fréquence de configuration d'une boucle à verrouillage de phase, PLL, pour qu'elle soit à l'intérieur de la bande de liaison montante de la bande de signal utile, effectuer un balayage dans la largeur de bande complète de la station de base, et enregistrer les valeurs de la puissance de réception à large bande et de la puissance de réception à bande étroite reçues par la station de base, et utiliser ensuite une fréquence correspondant à une valeur maximale de puissance de réception à large bande maximale et une valeur maximale de puissance de réception à bande étroite maximale comme une fréquence du brouillage fixe extérieur ; et régler une fréquence de liaison montante de la station de base pour qu'elle soit la fréquence du brouillage fixe extérieur, déclencher simultanément le module de commande d'antenne pour activer à nouveau la fonction de balayage d'angle d'inclinaison vers le bas de l'antenne, et utiliser un angle d'inclinaison vers le bas correspondant à une valeur maximale de puissance de réception à large bande et une valeur maximale de puissance de réception à bande étroite, qui sont enregistrées, comme un angle d'azimut de la source de brouillage à l'extérieur de la station de base ; et
le module de commande d'antenne est agencé en outre pour, après la réception de l'instruction du module de jugement de brouillage, désactiver la fonction de balayage d'angle d'inclinaison vers le bas de l'antenne ; et activer à nouveau la fonction de balayage d'angle d'inclinaison vers le bas de l'antenne de la station de base lors du déclenchement du module de détermination d'azimut de brouillage, ajuster l'angle d'inclinaison vers le bas de l'antenne pour effectuer un balayage, et enregistrer des valeurs de puissance de réception à large bande et de puissance de réception à bande étroite reçues par la station de base au niveau d'angles d'inclinaison vers le bas correspondants,

13. Système selon la revendication 11 ou 12, dans lequel : l'antenne est une antenne intelligente, et le module de détermination d'azimut de brouillage est agencé en outre pour, après que l'angle correspondant à la valeur de puissance de réception à large bande maximale et la valeur de puissance de réception à bande étroite maximale est déterminé comme l'angle d'azimut de la source du brouillage fixe extérieur, activer d'un balayage d'une zone de secteur de couverture de plan horizontal de l'antenne intelligente, effectuer un balayage d'un degré -Y à un degré +Y, enregistrer des valeurs de puissance de réception à large bande et de puissance de réception à bande étroite au niveau de chaque degré d'un plan horizontal de l'antenne intelligente, et déterminer un emplacement de la source de brouillage à l'extérieur de la station de base en fonction d'un angle correspondant à une valeur de puissance de réception à large bande maximale et une valeur de puissance de réception à bande étroite maximale au niveau de chaque degré du plan horizontal de l'antenne intelligente, dans lequel Y est un angle d'azimut de la source de brouillage à l'extérieur de la station de base.
